# EUROPÄISCHE PATENTSCHRIFT

(11) **EP 1 694 590 B1**
(45) Veröffentlichungstag und Bekanntmachung des Hinweises auf die Patenterteilung: **13.08.2008**
(21) Anmeldenummer: 04803961.4
(22) Anmeldetag: 16.12.2004
(51) Int. Cl.: B65G 59/06

(54) **VORRICHTUNG ZUM VEREINZELN VON GEGENSTÄNDEN**
DEVICE FOR SEPARATING OBJECTS
DISPOSITIF POUR SEPARER DES OBJETS

(30) Priorität: 16.12.2003 DE 10358976
(43) Veröffentlichungstag der Anmeldung: 30.08.2006
(73) Patentinhaber: Borgwaldt KC GmbH, 22525 Hamburg (DE)
(72) Erfinder: LEHMANN, Ralf, 22525 Hamburg (DE)
(74) Vertreter: Wagner & Geyer
(86) Internationale Anmeldenummer: PCT/EP2004/014348
(87) Internationale Veröffentlichungsnummer: WO 2005/058735

(56) Entgegenhaltungen:
- EP-A- 0 343 505
- US-A- 5 251 784
- US-A- 5 370 496
- US-A- 5 628 428
- US-A- 6 073 801

## Beschreibung

Die Erfindung betrifft eine Vorrichtung zum Vereinzeln von Zigaretten aus einer Menge von in einem Schacht befindlichen Zigaretten gemäß dem Oberbegriff des Anspruchs 1.

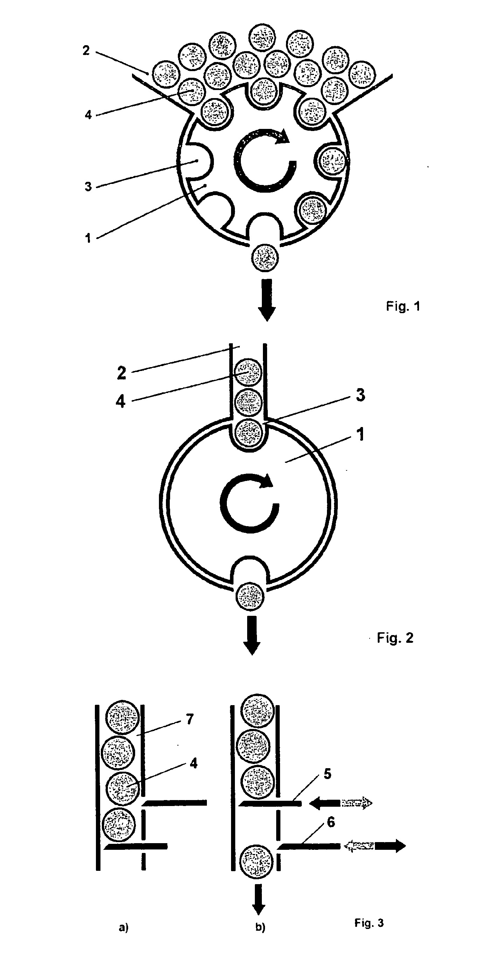

Vorrichtungen zum Vereinzeln von Gegenständen werden beispielsweise in der Zigarettenindustrie verwendet, um Zigaretten oder Filterstücke aus einer Zigarettenmenge oder Filterstückmenge zu vereinzeln, so dass sie einzeln weiterbehandelt oder insbesondere einzeln als Prüflinge für nachfolgende Messverfahren verwendet werden können. Bekannte Vorrichtungen, wie sie beispielsweise in Fig. 1 und Fig. 2 dargestellt sind, weisen drehbare Trommeln 1 am Austritt von Behältern 2 auf, die nach unten sich verjüngende Behälter (vgl. Fig. 1) oder Magazine in Form von schachtartigen Kassetten sein können, in denen die Gegenstände. übereinander liegen (vgl. Fig. 2). Die Trommeln weisen Nuten 3 auf, in die die einzelnen Zigaretten 4 gelangen und bei Drehung der Trommel 2 mitgenommen werden, so dass sie einzeln für die weitere Verwendung zur Verfügung stehen. Der Nachteil dieser sogenannten Trommelvereinzelung besteht darin, dass mit diesen Vorrichtungen keine Gegenstände, beispielsweise Zigaretten, mit unterschiedlichen Abmessungen bzw. Durchmessern vereinzelt werden können. Dies bedeutet, dass bereits bei einer geringen Abweichung der Abmessung der Gegenstände, beispielsweise bei einer geringen Änderungen der Zigarettendurchmesser, die Trommel getauscht werden muss, was zu erhöhtem Aufwand bei der Bereitstellung von Bauteilen der Vorrichtung und zu größeren Standzeiten führt.

Eine weitere bekannte Vorrichtung zum Vereinzeln von Gegenständen ist schematisch in Fig. 3 dargestellt. Zwei Klinken 5, 6 sind in einem Abstand, der der Abmessung der zu vereinzelnden Gegenstände, beispielsweise dem Durchmesser von zu vereinzelnden Zigaretten 4; entspricht, übereinander angeordnet und sind seitlich in eine schachtartige Kassette einschiebbar, in der die zu vereinzelnden Gegenstände übereinander liegen. Bevor die untere Klinke 6 zur Freigabe des untersten Gegenstands aus dem Schacht 7 herausbewegt wird, wird die obere Klinke
5 in den Schacht 7 hereinbewegt, um die darüber liegenden Zigaretten 4 im Schacht zurückzuhalten. Diese sogenannte Klinkenvereinzelung weist ebenso wie die Trommelvereinzelung den Nachteil auf, dass mit ihr nur Gegenstände mit geringen Durchmessertoleranzen vereinzelt werden können, da der Abstand der beiden übereinander angeordneten Klinken 5, 6 den Abmessungen der Gegenstände, beispielsweise dem Durchmesser der zu vereinzelnden Zigaretten, entsprechen muss. Ein weiterer Nachteil der Klinkenvereinzelung besteht darin, dass beim Bewegen der oberen Klinke 5 in den Schacht 7 die Gefahr besteht, dass die Gegenstände verletzt werden.

Aus der Druckschrift EP-A-0 343 505 ist ein Verkaufsautomat bekannt, der eine am Ausgang eines Behälters schwenkbar angeordnete Klappe zur Freigabe eines vereinzelten Gegenstands sowie eine weitere Klappe aufweist, die oberhalb der Klappe zur Freigabe im Behälter angeordnet ist, wobei die Klappe zum Zurückhalten der Gegenstände mittels einer Feder zum Behälterinnenraum hin vorgespannt ist. Die beiden Klappen sind dabei jeweils unabhängig voneinander betätigbar.

Aus der Druckschrift US 5 628 428 A ist eine automatische Ausgabevorrichtung für Verkaufsautomaten bekannt , bei der eine schwenkbare Grundplatte am Ausgang eines Fachs angeordnet ist, in der zu verkaufende Gegenstände gestapelt sind. Zur Freigabe eines Gegenstands wird die Klappe nach unten geklappt, wobei gleichzeitig ein Rückhalteelement seitlich gegen den vorletzten Gegenstand im Stapel gedrückt wird, um die Freigabe weiterer Gegenstände zu verhindern. Das Rückhalteelement drückt dabei hart auf den Gegenstand, so dass sich dieser insbesondere dann verformen oder verletzten kann, wenn der Gegenstand elastisch und verletzungsanfällig ist.

Der Erfindung liegt daher die Aufgabe zugrunde, eine Vorrichtung zum Vereinzeln von Zigaretten oder Zigarettenfilter zu schaffen, mit der eine schonende Vereinzelung mit geringem konstruktiven und gerätetechnischem Aufwand auch von Zigaretten möglich ist, die unterschiedliche Abmessungen bzw. Durchmesser aufweisen und elastisch oder verletzlich sind.

Die gestellte Aufgabe wird gemäß den kennzeichnenden Merkmalen des Anspruch 1 gelöst. Gegenüber den herkömmlichen Vorrichtungen zur Vereinzelung von Gegenständen zeichnet sich die erfindungsgemäße Vorrichtung dadurch aus, dass sie konstruktiv einfach ist, mit wenigen Bauelementen und damit mit geringem Betriebs- und Wartungsaufwand auskommt und insbesondere wenig störanfällig ist. Ein besonderer Vorteil der erfindungsgemäßen Vorrichtung besteht insbesondere auch darin, dass sie hohe Toleranzen hinsichtlich der Abmessungen der zu vereinzelnden Zigaretten, beispielsweise einen breiten Durchmesserbereich zulässt. Die Verwendung eines elastischen Druckstücks als Rückhalteelement ist besonders bei zu vereinzelnden Zigaretten oder Filterstücken vorteilhaft, die elastisch und/oder verletzlich sind.

Gemäß der Erfindung sind die Klappe und das Rückhalteelement Teile eines schwenkbaren Elements. Dadurch ist es möglich, durch eine einzige Schwenkbewegung sowohl das Freigeben eines Gegenstands als auch das Rückhalten der darüber liegenden Gegenstände zu bewirken. Die Funktionsweise ist daher bei einer geringen Zahl von Einzelelementen sehr einfach und damit insbesondere wenig störanfällig.

Weiterhin wird gemäß der Erfindung eine Zigarette bei einer Drehbewegung des schwenkbaren Elements und damit der Klappe freigegeben. Gleichzeitig gelangt das Rückhalteelement durch die Drehbewegung in die Austrittsbahn zur Rückhaltung weiterer Zigaretten.

Im Zusammenhang mit der Verwendung eines elastischen Druckstücks ist es vorteilhaft, dass der Gegenstand, der dem austretenden Gegenstand nachfolgt, im Behälter oder einem anschließenden Schacht nicht nur zurückgehalten, sondern auch verklemmt wird. Dies ist insbesondere dann vorteilhaft, wenn die zu vereinzelnden Gegenstände Zigaretten sind.

Vorteilhafterweise ist der Behälter eine Kassette, in der die zu vereinzelnden Gegenstände übereinander in einem Schacht angeordnet sind.

Unter den zu vereinzelnden Zigaretten sind auch Filterstücke für Zigaretten zu verstehen.

Die Erfindung sowie weitere Einzelheiten und Vorteile derselben wird bzw. werden nachfolgend an bevorzugten Ausführungsbeispielen unter Bezugnahme auf die Figuren erläutert. Es zeigen:
Fig. 1 eine herkömmliche Vorrichtung zum Vereinzeln von in einem Magazin enthaltenen Gegenständen mittels einer Vereinzelungstrommel in schematischer Darstellung;
Fig. 2 eine weitere herkömmliche Vorrichtung in schematischer Darstellung, bei der die Gegenstände in einem Schacht angeordnet sind, und mittels einer Vereinzelungstrommel vereinzelt werden;
Fig. 3 eine schematische Darstellung einer herkömmlichen Vorrichtung mit Klinken zur Vereinzelung von Gegenständen, die sich in einem Schacht befinden;
Fig. 4a, 4b, 4c schematische Darstellungen einer erfindungsgemäßen Ausführungsform für eine Vereinzelungsvorrichtung zur Erläuterung des Erfindungsprinzips und deren Funktionsweise; und
Fig. 5a, 5b, 5c perspektivische Schemazeichnungen, die den in Fig. 4 dargestellten schematischen Querschnittsdarstellungen entsprechen.

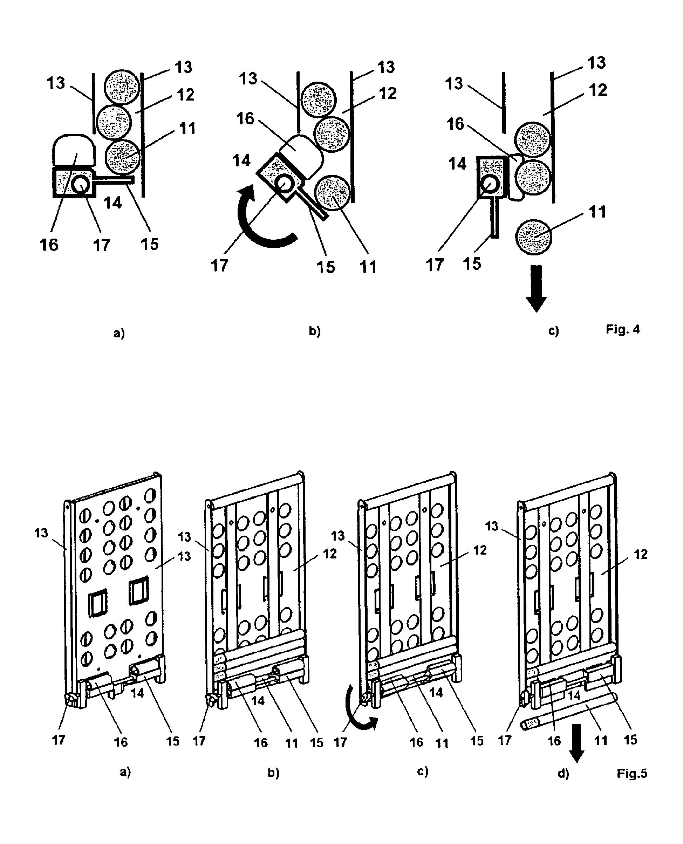

Wie die Figuren 4 und 5 zeigen, befinden sich stabförmige Gegenstände 11; hier Zigaretten 11, in einem Schacht 12 eines Behälters 13. in dem die Zigaretten 11 übereinander liegen. Ein schwenkbares Element 14 besteht aus einer Klappe 15 und einem Rückhalteelement 16, das bei dieser Ausführungsform elastisch ausgebildet ist. Das schwenkbare Element 14 und damit die Klappe 15 sowie das Rückhalteelement 16 sind um eine Welle 17 drehbar. In den Figuren 5a, 5b, 5c ist zur besseren Übersicht die vordere Wand des Behälters 13 nicht dargestellt.

Bei der in Fig. 4a und 5a dargestellten Grundstellung liegt die Klappe 15 quer im Schacht 12 und hält die Zigaretten 11 zurück, während das Rückhalteelement 16 sich außerhalb des Schachtes 12 befindet. Wie in Fig. 4b und 5b dargestellt ist, ist das schwenkbare Element 14 gemäß Pfeil 18 im Uhrzeigersinn um ca. 45° verschwenkt. In dieser Stellung wird die unterste Zigarette 11 noch von der Klappe 15 gehalten. Das Rückhalteelement 16 ist jedoch teilweise in den Schacht 12 eingeschwenkt und hält die über der untersten Zigarette 11 befindliche Zigarette von einer weiteren Abwärtsbewegung zurück.

In Fig. 4c und 5c ist schließlich die Stellung dargestellt, in der das schwenkbare Element 14 um 90° geschwenkt ist, und sich in seiner Endstellung befindet. Die Klappe 15 befindet sich nunmehr vollständig außerhalb des Schachts, 12, so dass die untere Zigarette 11 aus dem Behälter 13 bzw. dem Schacht 12 austritt. Gleichzeitig wird die nachfolgende Zigarette durch das elastische Rückhalteelement 16 im Schacht 12 verklemmt, so dass sie und die darüber liegenden Zigaretten im Schacht 12 verbleiben.

Nach Rückschwenken des schwenkbaren Elements 14 um 90° befindet sich die Klappe 15 und das Rückhalteelement 16 wiederum in der in Fig. 4a und 5a gezeigten Grundstellung, so dass der nächste Vereinzelungsvorgang von neuem ausgelöst werden kann.

Die Erfindung wurde zuvor anhand eines bevorzugten Ausführungsbeispiels beschrieben. Dem Fachmann sind jedoch zahlreiche Abwandlungen und Ausgestaltungen möglich, ohne dass dadurch der Erfindungsgedanke verlassen wird. Während bei der dargestellten Ausführungsform die Klappe 15 und das Rückhalteelement 16 aus zwei Teilen (siehe die Figuren 5a, 5b und 5c) bestehen, kann auch nur eine Klappe und/oder oder nur ein Rückhalteelement verwendet werden, das sich vorzugsweise im mittleren Bereich oder über die gesamte Länge des zu vereinzelnden Gegenstands erstreckt. Darüber hinaus ist es beispielsweise möglich, statt eines Schachtes für die Aufnahme der zu vereinzelnden Gegenstände ein Magazin zu verwenden, das sich nach unten zum Austrittsende hin verjüngt.

## Patentansprüche

1. Vorrichtung zum Vereinzeln von Zigaretten (11) aus einer Menge von in einem Schacht (12) befindlichen Zigaretten (11), mit einer schwenkbaren Klappe (15) am Ausgang des Schachts (12) zur Freigabe einer zu vereinzelnden Zigarette (11), und mit einem in Bewegungsrichtung der Zigaretten (11) oberhalb der Klappe (15) vorgesehenem Rückhalteelement (16) zum Rückhalten der übrigen Zigaretten (11) im Schacht (12), wobei das Rückhalteelement: (16) ein elastisches Druckstück ist,
**dadurch gekennzeichnet, dass**
- die Klappe (15) und das Rückhalteelement (16) Teile eines schwenkbaren Elements (14) sind,
- bei einer Drehbewegung des schwenkbaren Elements (14) die Klappe (15) eine Zigarette (11) freigibt, und das Rückhalteelement (16) zur Rückhaltung weiterer Zigaretten (11) in die Austrittsbahn des Schachts (12) gelangt, und
- nach Rückschwenken des schwenkbaren Elements (14) die Klappe (15) quer im Schacht (12) liegt, und die Zigaretten (11) zurückhält, während das Rückhalteelement (16) sich außerhalb des Schachts (12) befindet.

2. Vorrichtung nach Anspruch 1, **dadurch gekennzeichnet, dass** das Rückhalteelement (16) die nachfolgende Zigarette (11) in der Austrittsbahn verklemmt.

3. Vorrichtung nach einem der vorhergehenden Ansprüche, **gekennzeichnet durch** einen Behälter (13) in Form einer Kassette, in der die Zigaretten (11) übereinander in einem Schacht (12) angeordnet sind.

4. Vorrichtung nach einem der vorhergehenden Ansprüche, **dadurch gekennzeichnet, dass** die zu vereinzelnden Zigaretten (11) Prüflinge für nachfolgende Messverfahren sind.

## Claims

1. Device for separating cigarettes (11) from a quantity of cigarettes (11) located in a shaft (12), comprising a pivotal flap (15) provided at the outlet of the shaft (12) for releasing one cigarette (11) to be separated, and comprising a retaining element (16) which is provided in the direction of movement of the cigarettes (11), above the flap (15), for retaining the remaining cigarettes (11) in the shaft (12), the retaining element (16) being an elastic compression element,
**characterized in that**
- the flap (15) and the retaining element (16) are parts of a pivotal element (14),
- a cigarette (11) is released when the pivotal element (14) rotates, and the retaining element (16) enters the outlet track of the shaft (12) so as to retain further cigarettes (11), and
- the flap (15) is located traversly in the shaft (12) after pivoting the pivotal element (14) back and retains the cigarettes (11), whilst the retaining element (16) is located outside of the shaft (12).

2. Device according to claim 1, **characterized in that** the retaining element (16) clamps the succeeding cigarette (11) in the outlet track.

3. Device according to one of the preceding claims, **characterized by** a container (13) in the form of a cassette, in which the cigarettes (11) are arranged one above the other in a shaft (12).

4. Device according to one of the preceding claims, **characterized in that** the cigarettes (11) to be separated are specimens for subsequent measuring processes.

## Revendications

1. Dispositif de séparation de cigarettes (11) d'une quantité de cigarettes (11) se trouvant dans un puits (12), comprenant un volet pivotant (15) à la sortie du puits (12) pour libérer une cigarette à séparer (11) et un élément de retenue (16) disposé au-dessus du volet (15) dans le sens de déplacement des cigarettes (11) pour retenir les cigarettes restantes (11) dans le puits (12), dans lequel l'élément de retenue (16) est une pièce de pression élastique, **caractérisé en ce que**
- le volet (15) et l'élément de retenue (16) font partie d'un élément pivotant (14),
- lors d'une rotation de l'élément pivotant (14), le volet (15) libère une cigarette (11) et l'élément de retenue (16) parvient dans la voie de sortie du puits (12) pour retenir d'autres cigarettes (11), et
- après re-pivotement de l'élément pivotant (14), le volet (15) se situe transversalement dans le puits (12) et retient les cigarettes (11), tandis que l'élément de retenue se trouve en dehors du puits (12).

2. Dispositif selon la revendication 1, **caractérisé en ce que** l'élément de retenue (16) bloque la cigarette suivante (11) dans la voie de sortie.

3. Dispositif selon l'une quelconque des revendications précédentes, **caractérisé par** un récipient (13) sous la forme d'une cassette, dans laquelle les cigarettes (11) sont agencées l'une au-dessus de l'autre dans un puits (12).

4. Dispositif selon l'une quelconque des revendications précédentes, **caractérisé en ce que** les cigarettes à séparer (11) sont des échantillons pour des procédés de mesure ultérieurs.
